# EUROPÄISCHE PATENTSCHRIFT

(11) **EP 1 022 048 B1**
(45) Veröffentlichungstag und Bekanntmachung des Hinweises auf die Patenterteilung: **27.04.2005**
(21) Anmeldenummer: 99122365.2
(22) Anmeldetag: 10.11.1999
(51) Int. Cl.: B01D 53/94, F01N 3/28, F01N 3/20

(54) **Verfahren zur Dosierung eines Reduktionsmittels, sowie Vorrichtung zur Durchführung des Verfahrens**
Process and device for metering a reducing agent
Procédé et dispositif de dosage d'un agent de réduction

(30) Priorität: 21.01.1999 DE 19902207
(43) Veröffentlichungstag der Anmeldung: 26.07.2000
(73) Patentinhaber: MAN NUTZFAHRZEUGE AG, 80995 München (DE)
(72) Erfinder: Döring, Andreas Dipl.-Ing., 90403 Nürnberg (DE)

(56) Entgegenhaltungen:
- EP-A- 0 555 746
- EP-A- 0 558 452
- DE-A- 2 428 965
- DE-A- 3 536 315
- FR-A- 2 717 223
- US-A- 3 964 875

## Beschreibung

Die Erfindung bezieht sich auf ein Verfahren zur Dosierung eines Reduktionsmittels gemäß den Gattungsbegriffen des Anspruches 1 sowie eine Anordnung zur Durchführung des Verfahrens.

Aus der EP 0 555 746 A ist eine Vorrichtung bekannt, um dem Abgas eines Dieselmotors zur Reduzierung der Stickoxide eine Harnstofflösung beizumischen. Die Harnstofflösung wird stromauf eines Hydrolysekatalysators dem Abgas feinzerstäubt beigemischt. Um eine effektive Umsetzung des Harnstoffes zu Ammoniak zu erzielen ist es notwendig, das Gemisch aus Abgas und Harnstofflösung zu homogenisieren. Dies soll durch Leitbleche erreicht werden, welche das Gemisch in eine Rotationsbewegung versetzen.

Aus der FR 2717223 A ist eine Leitvorrichtung zur Homogenisierung einer Abgasströmung in einer Abgasleitung vor dem Eintritt in einen Katalysator bekannt, wobei die Leitvorrichtung in Abhängigkeit vom Abgastemperatur und/oder weiteren Motorparametern mechanisch oder elektromechanisch verstellbar ist. Nachteilig bei dieser Anordnung ist es, dass zum Verstellen der Leitvorrichtung ein Antrieb mit entsprechender Steuereinrichtung notwendig ist.

Der Erfindung liegt die Aufgabe zugrunde, ein Verfahren anzugeben und eine Vorrichtung zu schaffen, mit denen die Verteilung des Reduktionsmittels über den gesamten Querschnitt des Katalysators einer Brennkraftmaschine verbesserbar ist.

Die Aufgabe wird gelöst durch ein Verfahren gemäß den kennzeichnenden Merkmalen des Anspruches 1 und eine Anordnung zur Durchführung des Verfahrens gemäß Anspruch 2.

Durch die Steuerung bzw. Einstellung der Leitvorrichtung mittels des Abgasstromes selbst erfolgt eine optimale Homogenisierung des Gemisches vor Eintritt in den Katalysator der Brennkraftmaschine ohne dass eine Antriebs- und Steuereinrichtung für die Leitvorrichtung notwendig ist. Die Geschwindigkeit und Dichte des Abgasstroms hängt vom Betriebszustand der Brennkraftmaschine ab und ist somit ein Maß für die Verstellung der Leitvorrichtung.

Zur Durchführung des Verfahrens lässt sich in vorteilhafter Weise eine Leitvorrichtung mit federbeaufschlagten Leitblechen einsetzen, wobei der Abgasstrom die federbeaufschlagten Leitbleche so verschwenkt, dass sich abhängig von der Geschwindigkeit und Dichte des Abgasstroms eine optimale Homogenisierung des Abgasstroms einstellt.

Das erfindungsgemäße Verfahren und Vorrichtungen zur Durchführung dieses Verfahrens sind an Hand von Zeichnungen dargestellt. Es zeigt:
- Fig. 1: die Einbringung eines Reduktionsmittel in einen Abgasstrom vor einem Katalysator
- Fig. 2: die Einbringung eines Reduktionsmittels in einen Abgasstrom unter Berücksichtigung der Schwerkraft
- Fig. 3: die erfindungsgemäße Homogenisierung des Abgas-Reduktionsmittelgemisches durch eine Leitvorrichtung
- Fig. 4 - 6: selbsttätige Steuerung der Leitbleche durch die Strömung des Abgases
- Fig. 7: die aktive Steuerung der Leitvorrichtung

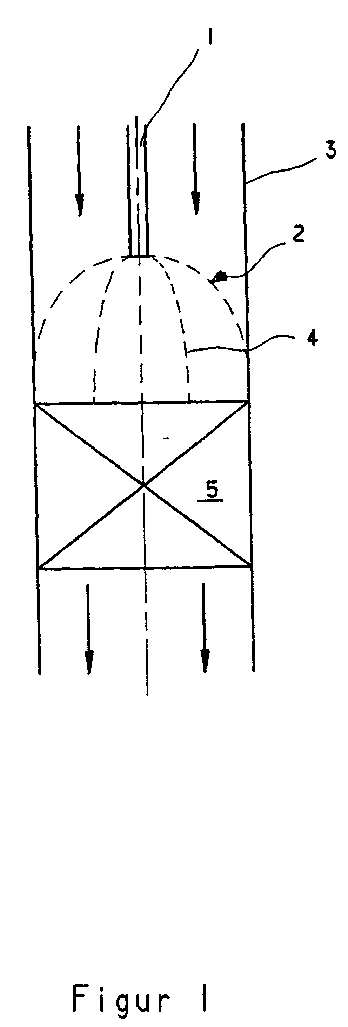

Figur 1 zeigt die Einbringung am Beispiel eines flüssigen Reduktionsmittels in einen Abgasstrom. Das aus einer Düse 1 austretende Reduktionsmittel bildet einen Sprühkegel 2. Ohne zusätzliche Maßnahmen lagert sich am äußeren Rand des Sprühkegels 2 Reduktionsmittel am Abgasrohr 3 an, während bei Erhöhung der Gasgeschwindigkeit der Sprühkegel 2 zusammengedrückt wird und sich so in Achsnähe des Sprühkegels 2 eine Zone 4 mit angereichertem Reduktionsmittel bildet.

Vor Eintritt des Abgas-Reduktionsmittelgemisches in einen Katalysator 5 sollte die Konzentration über den Querschnitt möglichst homogen sein, um übermäßigen Schlupf von Reduktionsmittel zu vermeiden.

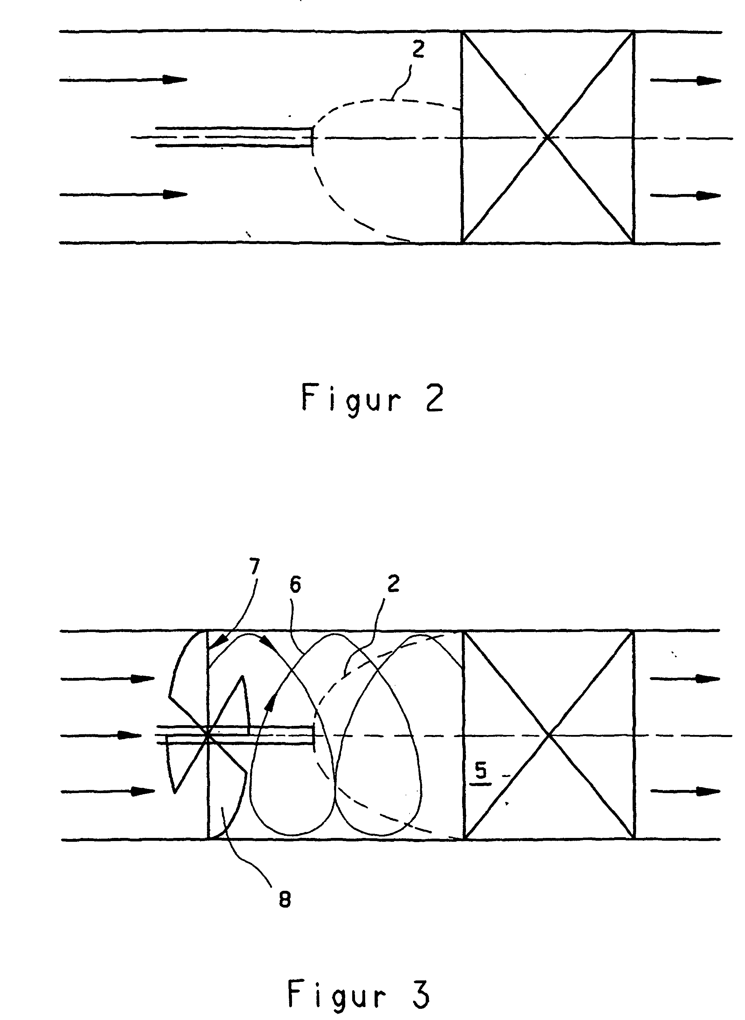

Figur 2 zeigt den Einfluß der Schwerkraft auf die Ausbildung des Sprühkegels 2. Man erkennt ohne weiteres, daß eine zusätzliche Inhomogenität auftritt.

Erfindungsgemäß wird nach Figur 3 der axialen Strömung des Abgases eine Drallbewegung aufgeprägt. Durch die aus dem Drall 6 resultierende, radial gerichtete Kraft wird das Reduktionsmittel im nachgeschalteten Sprühkegel 2 ebenfalls in Drall versetzt und somit eine Konzentration von Reduktionsmittel in Achsnähe vermieden. Es erfolgt also eine Homogenisierung der Reduktionsmittelkonzentration über den Querschnitt. Bei Eintritt in den Katalysator 5 wird eine gleichmäßige Umsetzung der Stickoxide mit dem Reduktionsmittel erreicht und der sonst durch Konzentrationsunterschiede bedingte Schlupf von Reduktionsmittel vermieden.

Als Drallerzeuger können mechanische Leitvorrichtungen 7 dienen. Die Leitvorrichtungen 7 können aus Leitblechen 8 bestehen, die radial gerichtet sind und die axiale Strömung so umlenken, daß ein Drall 6 entsteht. Die Leitbleche 8 sind also den Leitschaufeln vor Turbinen nicht unähnlich.

Die Leitbleche 8 können drehbar angeordnet sein, so daß die Umlenkung der Axialströmung geregelt werden kann. Die Drehung kann durch einen elektrisch oder hydraulisch beaufschlagbaren Stellmotor erfolgen.

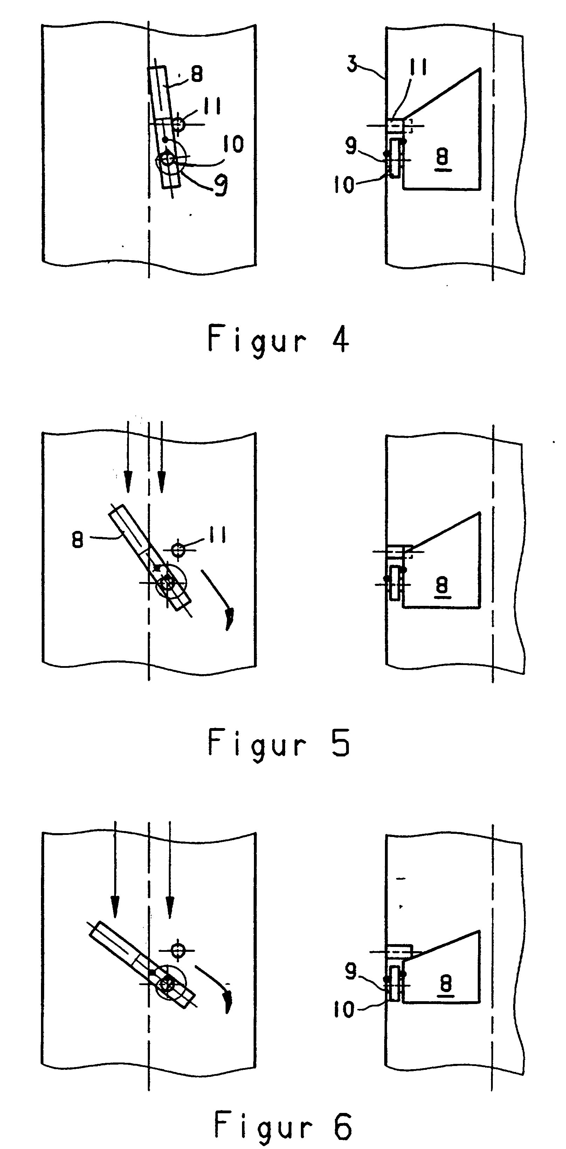

Besonders vorteilhaft kann eine selbständige Regelung sein, wie in den Figuren 4 bis 6 dargestellt.

In Figur 4 ist ein Leitblech 8 in Grundstellung gezeigt, Das Leitblech 8 ist um eine Achse 9 drehbar in der Wand des Abgasrohres 3 gelagert. Eine Feder 10 dient der Rückstellung des Leitbleches 8 und preßt dieses gegen einen Anschlag 11.

Die linke Hälfte von Fig. 4 zeigt das Leitblech 8 mit Achse 9 und Anschlag 11. Das Leitblech 8 ist leicht gegen die Hauptachse geneigt und liegt ohne Strömung am Anschlag 11 an.

Figur 5 stellt das Leitblech 8 bei Anströmung dar. In der linken Hälfte der Figur 5 hat sich das Leitblech gegen die Strömung angestellt und liegt nicht mehr am Anschlag 11 an.

In Figur 6 ist die Drehung des Leitbleches 8 durch nochmals gesteigerte Anströmgeschwindigkeit noch weiter fortgeschritten. Die Feder 9 sorgt stets für ein Gleichgewicht zwischen dem durch Strömungskräfte hervorgerufenen Drehmoment um Achse 10 und dem Reaktionsmoment der Feder 9. Die Länge der Pfeile symbolisiert die höhere Anströmgeschwindigkeit.

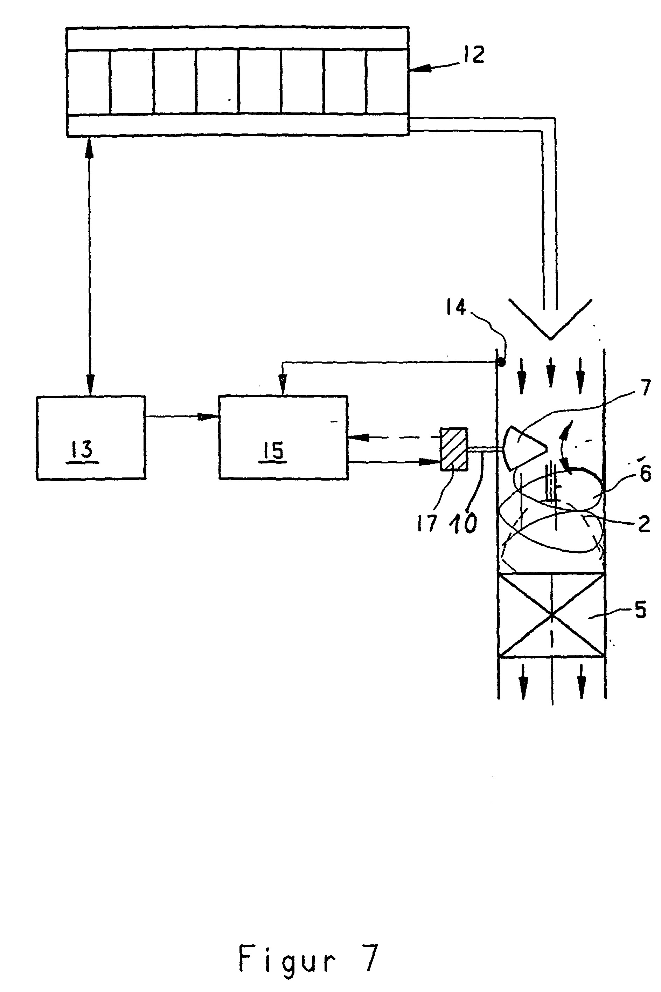

Figur 7 stellt eine Form der Regelung der Leitvorrichtung 7 dar. Die für jeden Betriebszustand einer Brennkraftmaschine 12 optimale Leitblechstellung kann an einer Referenzbrennkraftmaschine ermittelt und diese Werte dann in Kennfeldern abgelegt werden. Im Betrieb der Brennkraftmaschine wird die jeweilige Abgasgeschwindigkeit und/oder -temperatur und/oder Abgasdruck aus Werten, die das elektronische Motorsteuergerät 13 liefert und/oder aus Sensoren 14 bestimmt. In Verbindung mit den abgelegten Kennfeldern wird dann mit Hilfe eines elektronischen Steuergerätes 15 die optimale Stellung der Leitvorrichtung 7 ermittelt und eingeregelt. Hierzu sind Antriebselemente 17, wie z.B. Elektromotoren oder pneumatische Steller notwendig. Der geregelte Drall sorgt für eine Homogenisierung der Konzentration im Sprühkegel 2, so daß im Katalysator 5 gleiche Reaktionsbedingungen über den Querschnitt gegeben sind.

## Patentansprüche

1. Verfahren zur Dosierung eines Reduktionsmittels, beispielsweise Harnstoff, dessen Spaltprodukte, bzw. wässrige Harnstofflösung ins Abgas einer Brennkraftmaschine, wobei die Zuführung des Reduktionsmittels in die Abgasleitung vor einem Katalysator und die gleichmäßige Verteilung des Reduktionsmittels über den Querschnitt des Katalysators mittels einer Leitvorrichtung erfolgt, **dadurch gekennzeichnet, dass** die Leitvorrichtung (7) aus wenigstens einem Leitblech (8) gebildet wird, das so geformt und gelagert ist, dass dessen Stellung durch die Strömung des Abgases in entsprechende Positionen selbsttätig eingeregelt wird.

2. Leitvorrichtung zur Durchführung des Verfahrens gemäß Anspruch 1, **dadurch gekennzeichnet, dass** die Leitvorrichtung (7) wenigstens ein Leitblech (8) aufweist, das um seine Achse (10) drehbar im Abgasrohr (5) angeordnet ist und eine Feder (9) aufweist, welche auf das Leitblech (8) bei dessen Verstellung eine Rückstellende Kraft ausübt.

## Claims

1. Procedure for metering a reducing agent, for example urea, whose fission products and/or aqueous urea solution are fed into the exhaust gas from an internal combustion engine, whereby the reducing agent is supplied to the exhaust-gas pipe upstream of a catalytic converter and is evenly distributed over the cross-section of saidcatalytic converterby means of a guiding device, **characterised in that** said guiding device (7) is composed of at least one guiding panel (8) designed and mounted so that it is automatically moved into corresponding positions by the flow of the exhaust gas.

2. Guiding device for carrying out the procedure as per Claim 1, **characterised in that** the guiding device (7) is composed of at least one guiding panel (8) arranged in the exhaust-gas pipe (5)so that it can turn about its axis (10) and of a spring (9) exerting a force on the guiding plate (8), returning said guiding plate (8) to its initial position after it has been moved to another position.

## Revendications

1. Procédé de dosage d'un agent de réduction, par exemple l'urée, ses produits de clivage, ou une solution aqueuse d'urée, dans les gaz d'échappement d'un moteur à combustion, selon lequel on alimente l'agent de réduction dans la conduite d'échappement a lieu avant un catalyseur et la répartition homogène de l'agent de réduction se fait sur la section du catalyseur au moyen d'un dispositif de guidage,
**caractérisé en ce que**
le dispositif de guidage (7) est constitué d'au moins un déflecteur (8) formé et logé pour que sa position se règle automatiquement dans des positions correspondantes à travers l'écoulement du gaz d'échappement.

2. Dispositif de guidage permettant la réalisation du procédé selon la revendication 1,
**caractérisé en ce que**
le dispositif de guidage (7) comporte au moins un déflecteur (8) disposé de manière à tourner autour de son axe (10) dans le pot d'échappement (5) et un ressort (9) qui exerce une force de rappel sur le déflecteur (8) lors de son déplacement.
